# EUROPÄISCHE PATENTSCHRIFT

(11) **EP 3 599 113 B1**
(45) Veröffentlichungstag und Bekanntmachung des Hinweises auf die Patenterteilung: **31.03.2021**
(21) Anmeldenummer: 19179845.3
(22) Anmeldetag: 13.06.2019
(51) Int. Cl.: B60C 11/24

(54) **REIFEN SOWIE VERFAHREN ZUM HERSTELLEN EINES REIFENS**
TYRE AND METHOD FOR PRODUCING SAME
PNEU AINSI QUE PROCÉDÉ DE FABRICATION D'UN PNEU

(30) Priorität: 25.07.2018 DE 102018212364
(43) Veröffentlichungstag der Anmeldung: 29.01.2020
(73) Patentinhaber: Continental Reifen Deutschland GmbH, 30165 Hannover (DE)
(72) Erfinder: Huber, Tobias, 30165 Hannover (DE); Weigert, Christian, 30165 Hannover (DE); Senne, Armin, 30165 Hannover (DE)
(74) Vertreter: Continental Corporation

(56) Entgegenhaltungen:
- EP-A1- 2 810 794
- DE-U1- 20 216 290
- US-A1- 2005 016 649

## Beschreibung

Die Erfindung betrifft einen Reifen, insbesondere Fahrzeugreifen, gemäß dem Oberbegriff des Anspruches 1. Die Erfindung betrifft weiterhin ein Verfahren zum Herstellen eines derartigen Reifens.

Es sind Reifen bekannt, die zum Erfassen eines Grenzwertes für eine Abriebhöhe des Laufstreifens nachträglich in den Reifen, insbesondere in den Laufstreifen eingebrachte Sensorelemente aufweisen. Diese Sensorelemente sind beispielsweise als Abriebstifte ausgeführt, die nachträglich in die Profilierung des Reifens eingesteckt werden und damit von der Oberfläche des Reifens in diesen hineinragen. Bei der Benutzung des Reifens nutzt sich der Abriebstift dadurch ebenso wie die Profilierung ab, wobei der Abrieb durch Erfassen des Widerstandes als elektrische Eigenschaft über eine signalleitende Verbindung in gewissen zeitlichen Abständen erfasst werden kann. Der Widerstand ist demnach mit dem Abrieb korreliert, so dass aus einer Messung des Widerstandes auf die Abriebhöhe des Laufstreifens geschlossen werden kann. Die signalleitende Verbindung kann hierbei drahtlos oder drahtgebunden ausgeführt sein und mit zu einem Reifenmodul ausgebildet sein, um die elektrischen Messgrößen entsprechend auswerten bzw. verarbeiten zu können.

Nachteilig ist hierbei, dass durch das nachträgliche Einbringen der Abriebstifte in den Reifen Sollbruchstellen generiert werden, die zu einer Beschädigung des Reifens im Betrieb führen können oder zumindest die Fahreigenschaften beeinträchtigen können. Zudem haben die Abriebstifte einen gewissen Platzbedarf sowie eine vom Laufstreifenmaterial abweichende Materialbeschaffenheit, wodurch sich eine Veränderung der Laufeigenschaften ergeben kann.

Reifen mit Sensorelementen sind beispielhaft in EP 2 810 794 A1, DE 202 16 290 U1 sowie US 2005/016649 A1 beschrieben.

Aufgabe der Erfindung ist daher, einen Reifen bereitzustellen, dessen Abrieb in einfacher und zuverlässiger Weise sowie ohne maßgebliche Beeinträchtigungen des Reifens erfasst werden kann. Aufgabe ist weiterhin, ein Verfahren zum Herstellen eines derartigen Reifens anzugeben.

Diese Aufgabe wird durch einen Reifen nach Anspruch 1 sowie ein Verfahren nach Anspruch 10 gelöst. Vorteilhafte Weiterbildungen sind in den Unteransprüchen angegeben.

Erfindungsgemäß ist demnach vorgesehen, dass in einem Reifen mindestens ein in den Reifenaufbaukomponenten angeordnetes Sensorelement vorgesehen ist, das einen flächig ausgedehnten, flexiblen Träger aufweist und auf dem Träger mindestens eine leitfähige Struktur abgeschieden ist, wobei eine elektrische Messgröße erfassbar ist, die die elektrische Eigenschaft der mindestens einen abgeschiedenen leitfähigen Struktur auf dem Träger charakterisiert und der flexible Träger mit der abgeschiedenen leitfähigen Struktur derartig in den Reifenaufbaukomponenten angeordnet ist, dass aus einer zeitlichen Veränderung der elektrischen Messgröße auf eine Abriebhöhe des Laufstreifens geschlossen werden kann.

Demnach wird vorteilhafterweise ein Sensorelement bereitgestellt, dass mit einem partikelabscheidenden Verfahren hergestellt wird. Das Sensorelement wird demnach auf den Träger aufgedruckt und anschließend in den Reifen eingebracht, so dass ein Sensorelement nach dem Prinzip der gedruckten Elektronik (printed electronics) verwendet wird. Dadurch kann eine sehr flexible Lösung bereitgestellt werden, da die mindestens eine leitfähige Struktur variabel geplant und ausgeführt werden kann. Die leitfähige Struktur ist dabei vorzugsweise in Ausdehnungsrichtung des Trägers auf diesem aufgebracht.

Durch die Verwendung eines flexiblen Trägers für dieses Sensorelement kann sich dieser zudem an die Konturierung des Reifens bzw. der Reifenaufbaukomponente, an der das Sensorelement anliegt, und ggf. vorhandene Unebenheiten der Auflage einfach anpassen, so dass sich keine Hohlräume oder Spannungen zwischen der jeweiligen Reifenaufbaukomponente und dem Sensorelement ausbilden. Die abgeschiedenen Partikel auf dem Träger passen sich dann ebenfalls daran an, so dass auch dann noch die elektrischen Eigenschaften bzw. Messgrößen ermittelt werden können.

Zudem bewirkt die flexible Ausführung des Trägers, dass die Laufeigenschaften bzw. die Struktur des Reifens durch das in den Reifenaufbaukomponenten angeordnete Sensorelement nicht maßgeblich beeinträchtigt wird. Die Flexibilität bzw. die Elastizität des Trägers kann dabei an diejenige der Gummimischung des Laufstreifens angepasst werden, so dass durch das Einbringen des Trägers keine maßgeblichen strukturellen Veränderungen im Reifen auftreten. Der flexible Träger kann dazu beispielsweise aus einem Elastomer oder einem Polymer gefertigt sein. Der Träger kann weiterhin sehr dünn ausgeführt werden, da er lediglich als Trägermaterial für die leitfähige Struktur dient. Beispielsweise kann eine Dicke von zwischen 0,5mm und 1mm vorgesehen sein, so dass der Träger platzsparend im Reifen angeordnet werden kann, so dass das eigentliche Material des Reifens nicht zu sehr verdrängt bzw. reduziert wird.

Erfindungsgemäß ist vorgesehen, dass das Sensorelement zumindest bereichsweise in mindestens einer Reifenaufbaukomponente, insbesondere im Laufstreifen, integriert ist. Demnach kann das Sensorelement vorteilhafterweise Teil der Reifenkomponente selbst sein, so dass die Kontur des Reifens nicht verändert wird.

Erfindungsgemäß ist dabei vorgesehen, dass das Sensorelement bereits im Reifenaufbauprozess in die Reifenaufbaukomponente zumindest bereichsweise eingebracht ist. Darunter ist zu verstehen, dass das Sensorelement nicht nachträglich in den Reifen eingebaut wird, indem Aussparungen nach dem eigentlichen Reifenaufbauprozess in den Reifen eingebracht und/oder mit dem Sensorelement befüllt werden. Als Reifenaufbauprozess wird hierbei das Aufspulen und Zusammensetzen der einzelnen Reifenaufbaukomponenten und das anschließende Vernetzen bzw. Vulkanisieren der einzelnen Reifenaufbaukomponenten in einer Heizpresse verstanden. Das Sensorelement wird somit in den Reifen bzw. zwischen den Reifenaufbaukomponenten eingebettet und ggf. auch mit dem Material des Reifens verschmolzen. Dadurch kann gewährleistet werden, dass das Sensorelement fest und sicher im Reifen integriert ist und der fertiggestellte Reifen nachträglich nicht verändert bzw. modifiziert wird.

Gemäß einer weiteren Ausführung ist vorgesehen, dass das Sensorelement derartig in der Reifenaufbaukomponente integriert ist, dass das Sensorelement bei Erreichen einer bestimmten Abriebhöhe des Laufstreifens zumindest bereichsweise derartig abgetragen wird, dass sich die die leitfähige Struktur charakterisierende elektrische Messgröße zeitlich verändert. Somit kann das Sensorelement in einer Abriebhöhe von beispielsweise 4mm bei Winterreifen und in einer Abriebhöhe von 1,5mm bei Sommerreifen eingebettet werden.

Dadurch kann vorteilhafterweise erreicht werden, dass das Sensorelement je nach Reifenart genau dann zusammen mit dem Laufstreifen bzw. der Profilierung abgetragen wird, wenn die jeweils vorgegebene Abriebhöhe erreicht ist. In dem Fall kann die abgetragene elektrisch leitfähige Struktur auf dem Träger nicht mehr zur jeweiligen elektrischen Eigenschaft beitragen, was in einer Messung der elektrischen Messgröße erkannt werden kann. Ist somit die jeweilige Abriebhöhe erreicht, kann dies festgestellt und der Fahrer entsprechend darüber informiert werden.

Erfindungsgemäß ist vorgesehen, dass das Sensorelement als zumindest bereichsweise umgeformtes Sensorelement mit umgeformtem Träger und damit auch umgeformter leitfähiger Struktur ausgebildet ist, wobei das umgeformte Sensorelement derartig in der Reifenaufbaukomponente angeordnet ist, dass das Sensorelement an eine Konturierung des Reifens, beispielsweise an eine Profilrille im Laufstreifen, angepasst ist.

Dadurch wird erreicht, dass das Sensorelement an die Form des Laufstreifens bzw. der Reifenaufbaukomponente angepasst ist. Demnach ist das Sensorelement erfindungsgemäß im Laufstreifen flächig in axialer Richtung ausgedehnt und dabei um eine Profilrille oder eine weitere in den Laufstreifen eingebrachte Struktur gelegt. Dadurch ist keine Unterbrechung nötig, um die Profilrille bzw. eine andere Struktur zu überbrücken, wenn diese tiefer in den Laufstreifen ragt als die zu detektierende Abriebhöhe.

Gemäß einer weiteren Ausführungsform ist vorgesehen, dass das mindestens eine Sensorelement durch ein resistives Sensorelement und/oder ein kapazitives Sensorelement und/oder ein induktives Sensorelement und/oder einen Schwingkreis ausgebildet ist, wobei die elektrisch leitfähige Struktur auf dem Träger dazu die Form eines flächig ausgedehnten Widerstandes mit einem bestimmten Widerstandswert bzw. eines Kondensators mit einer bestimmten Kapazität bzw. einer Spule mit einer bestimmten Induktivität bzw. einer Kombination daraus aufweist. Dadurch kann je nach Anwendung und Messprinzip in variabler Weise entschieden werden, welches elektronische Bauteil durch das Sensorelement ausgebildet werden soll und welche elektrische Messgröße demnach zur Ermittlung und Überwachung der Abriebhöhe verwendet werden soll. Es kann auch eine Kombination verwendet werden, um unterschiedliche Messmethoden anwenden zu können und das Messergebnis dadurch zu verifizieren.

Gemäß einer bevorzugten Weiterbildung ist vorgesehen, dass das Sensorelement als energieerzeugendes Sensorelement ausgebildet ist. Demnach weist das Sensorelement eine elektrisch leitfähige Struktur auf, die beispielsweise einen dielektrischen Bereich oder einen piezoelektrischen Bereich auf dem Sensorelement ausbildet. Unter einem energieerzeugenden Sensorelement wird somit ein Element verstanden, das in der Lage ist, aus der Bewegungsenergie im Reifen einen Energieimpuls zu erzeugen. Dies kann mit dielektrischen Elastomeren oder piezoelektrischen Materialien erreicht werden, die flächig aufgetragen werden. Dieses Sensorelement wirkt somit als autarker Energieerzeuger, der nach dem Prinzip des "energy harvesting" die Bewegungsenergie oder Verformungsenergie des Reifens in elektrische Energie umwandeln kann. Ein Impuls wird dadurch beispielsweise dann erzeugt, wenn sich der Reifen mit dem Sensorelement beim Abrollen auf dem Untergrund verformt. Dieser Impuls kann entsprechend erkannt und detektiert werden, so lange das Sensorelement intakt ist. Das energieerzeugende Sensorelement kann dabei auch mit den anderen Sensorelementen kombiniert werden, um den erzeugten Impuls entsprechend übertragen zu können.

Gemäß einer bevorzugten Weiterbildung ist vorgesehen, dass die signalleitende Verbindung eine drahtgebundene und/oder eine drahtlose Verbindung ist. Damit kann frei gewählt werden, ob im Reifen zusätzliche Verbindungsmittel integriert werden oder eine drahtlose Übermittlung stattfindet.

Gemäß einer Variante kann dabei vorgesehen sein, dass ein induktiver Teil des als Schwingkreis ausgeführten Sensorelementes zur Ausbildung der drahtlosen signalleitenden Verbindung dient, wobei der induktive Teil dazu mit einer Detektionsspule in Wirkverbindung steht, so dass
- bei Vorliegen eines funktionsfähigen Schwingkreises eine die jeweilige elektrische Messgröße charakterisierende Größe im induktiven Teil des Schwingkreises erzeugt wird und diese von der Detektionsspule erfassbar ist, und
- bei Vorliegen einer Beeinträchtigung des Schwingkreises bei Erreichen oder Überschreiten der Abriebhöhe eine zeitliche Veränderung der die jeweilige elektrische Messgröße charakterisierende Größe im induktiven Teil des Schwingkreises erzeugt wird und über die Detektionsspule erfassbar ist.

Demnach kann beispielsweise bei Vorliegen eines bestimmten Widerstandes im resistiven Teil des Schwingkreises ein bestimmtes Magnetfeld im induktiven Teil des Schwingkreises erzeugt werden, das entsprechend drahtlos von der Detektionsspule wieder erfasst und anschließend weiterverarbeitet werden kann. Ist der resistive Teil jedoch abgetragen, weil die Abriebhöhe erreicht ist, fällt das Magnetfeld in dem induktiven Teil des Schwingkreises zusammen und die Detektionsspule kann nichts mehr detektieren. Somit kann auf ein Erreichen der Abriebhöhe geschlossen werden. Die Detektionsspule kann dabei beispielsweise mit einem Reifenmodul verbunden sein, das die Detektionsspule überwacht und demnach erkennen kann, ob die Abriebhöhe erreicht ist. Dadurch können weitere Modifikationen im Reifen durch Einbringen von weiteren Verbindungsmitteln entfallen. Zudem kann eine Energieversorgung des Sensorelementes entfallen, da für eine Messung und auch für die Übertragung keine Energie nötig ist. Somit wird dadurch ein passives Sensorelement ausgebildet.

Gemäß einer weiteren Ausführung ist vorgesehen, dass die drahtgebundene signalleitende Verbindung über mit der mindestens einen leitfähigen Struktur verbundenen Kontaktstellen ausgebildet ist, wobei das mindestens eine Sensorelement über die Kontaktstellen mit Verbindungsmitteln verbunden ist zum Ermöglichen einer Auswertung der elektrischen Messgrößen. Demnach wird das Sensorelement über leitfähige Strukturen im Reifen z.B. mit dem Reifenmodul zur Auswertung verbunden. Dadurch können Störungen bei der Übertragung vermieden werden.

Gemäß einer bevorzugten Ausführungsform ist demnach vorgesehen, dass die signalleitende Verbindung zwischen dem Sensorelement und einem Reifenmodul auf einer Innenschicht des Reifens ausgebildet ist. Dadurch kann eine Auswertung im Reifen stattfinden und über das Reifenmodul auch eine Übermittlung der Daten in eine übergeordnete Auswerteeinheit im Fahrzeug, so dass dem Fahrer angezeigt werden kann, wenn eine Abriebhöhe erreicht ist.

Gemäß einer bevorzugten Weiterbildung ist vorgesehen, dass die mindestens eine leitfähige Struktur durch Abscheiden von Partikeln, insbesondere von Graphen und/oder von Metall und/oder von einer Gummilösung mit leitfähigen Partikeln, insbesondere leitfähigen Nanopartikeln, und/oder von einer leitfähigen Paste und/oder von einer dielektrischen und/oder piezoelektrischen Paste auf dem Träger ausgebildet ist. Demnach können in einfacher Weise leitfähige Strukturen auf dem Träger erzeugt werden, wobei die verwendeten Materialien eine zuverlässige Abscheidung und eine gute Leitfähigkeit gewährleisten, so dass die elektrische Messgröße sicher erfasst werden kann.

Gemäß einer weiteren Ausführungsform ist vorgesehen, dass der Reifen mehrere Sensorelemente an unterschiedlichen Positionen und/oder in unterschiedlichen Abriebhöhen des Reifens aufweist. Demnach kann der Abrieb in lokalen Bereichen des Reifens überwacht und damit beispielsweise ein ungleichmäßiger Abrieb oder Beschädigungen im Reifen erkannt werden. Weiterhin können unterschiedliche Abriebhöhen überwacht werden und dadurch beispielsweise eine Vorwarnung ausgegeben werden, bereits bevor die Grenzwerte erreicht sind. Weiterhin können stark belastete Bereiche in mehreren Abriebhöhen überwacht werden als weniger stark belastete Bereiche des Reifens.

Erfindungsgemäß sind zur Herstellung eines solchen Reifens die folgenden Schritte vorgesehen:
Bereitstellen mindestens eines Sensorelementes, wobei dazu
- ein flexibler Träger und leitfähige Partikel zum Ausbilden der mindestens einen leitfähigen Struktur bereitgestellt werden; und
- die leitfähigen Partikel auf den flexiblen Träger gezielt abgeschieden werden, so dass mindestens eine vordefinierte leitfähige Struktur für das jeweilige Sensorelement ausgebildet wird; und
Auflegen des bereitgestellten Sensorelementes auf die jeweilige Reifenaufbaukomponente des Reifens und Weiterführung des Reifenaufbauprozesses zur Fertigstellung des Reifens.

Dadurch wird das Sensorelement in einfacher Weise im Reifenaufbauprozess in den Reifen integriert und dadurch sicher eingebettet. Das Sensorelement wird in einfacher und variabler Weise in einem "printed-electronics"-Prozess auf einem flexiblen Träger ausgebildet. Die Flexibilität bzw. die Elastizität des Trägers kann dabei an diejenige der Gummimischung des Laufstreifens angepasst werden, so dass durch das Einbringen des Trägers keine maßgeblichen strukturellen Veränderungen im Reifen auftreten. Der flexible Träger kann dazu beispielsweise aus einem Elastomer oder einem Polymer gefertigt sein.

Erfindungsgemäß ist vorgesehen, dass das bereitgestellte Sensorelement vor und/oder nach dem Auflegen auf die jeweilige Reifenaufbaukomponente durch Einwirken von Wärme umgeformt wird.

Dadurch kann das Sensorelement in einfacher Weise an die Konturierung im Reifen angepasst werden, falls dies für einen Reifen zielführen ist, weil dieser Strukturen aufweist, die tiefer als die gewählte zu überwachende Abriebhöhe ist. Der Umformprozess kann hierbei vorzugsweise vor dem Auflegen auf dem Reifen stattfinden, beispielsweise in einem beheizbaren Umformwerkzeug, beispielsweise einer Presse, die an die Konturierung des Reifens angepasst ist. Alternativ oder ergänzend kann das Sensorelement auch nach dem Auflegen auf die Reifenaufbaukomponente umgeformt werden. Dazu wird das Sensorelement mit der Reifenaufbaukomponente zusammen erhitzt, so dass das Sensorelement durch das Verbacken anschmilzt und sich automatisch an die Form bzw. die Konturierung der Reifenaufbaukomponente anpasst.

Das Sensorelement kann hierbei als Abriebsensor nicht nur in einem Reifen angeordnet sein, sondern auch in anderen Materialien, z.B. Kunststoffen, und verschleißbehafteten Anlagen bzw. Geräten, z.B. Rollen, Buchsen, Förderbänder, Riemen, Schleifscheiben, Teppichböden, Schutzanstrichen, Schläuchen, Rohren, etc.. Besonders bei Schläuchen und Rohren, die abrasive und korrosive Stoffe, z.B. Sand, Beton, Öl, Gas oder Chemikalien, fördern, kann mit einem derartigen Abriebsensor eine bestimmte Verschleißgrenze erkannt werden.

Im Folgenden wird die Erfindung anhand von Ausführungsbeispielen näher erläutert. Es zeigen:
- Fig. 1: eine Schnittansicht eines erfindungsgemäßen Reifens;
- Fig. 2a, b, c, d: Ausführungsformen eines Sensorelementes in einem Reifen gemäß Figur 1.

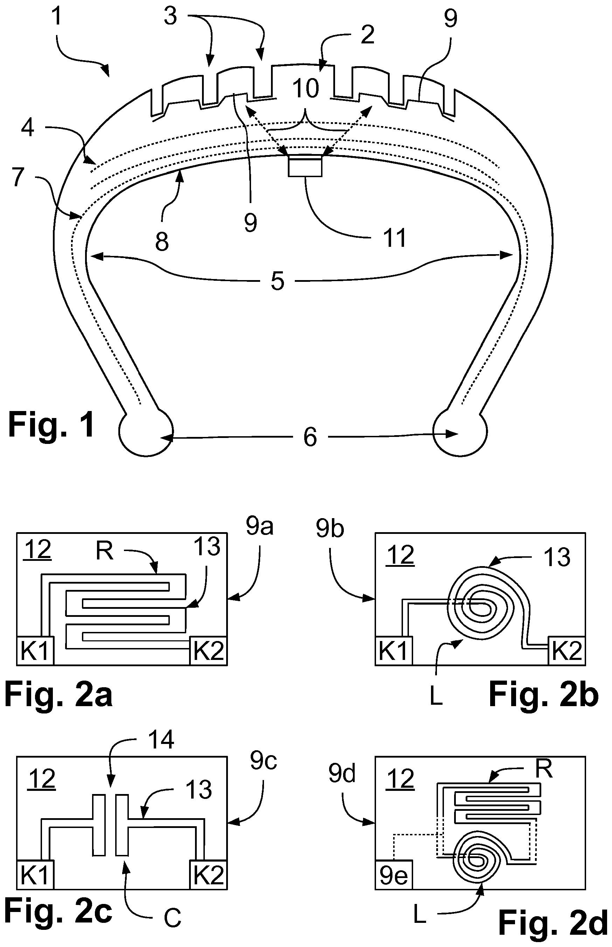

Gemäß Figur 1 ist ein Reifen 1, insbesondere Fahrzeugreifen, vorgesehen, der in herkömmlicher Bauart mehrere Reifenaufbaukomponenten, nämlich einen Laufstreifen 2, in den Laufstreifen 2 eingebrachte Profilrillen 3, Gürtellagen 4, Seitenwände 5, Reifenwülste 6 sowie eine die Reifenwülste 6 verbindende Karkasse 7, die zwischen einer Innenschicht 8 und den Gürtellagen 4 verläuft, aufweist. Im Bereich des Laufstreifens 2 sind gemäß diesem Ausführungsbeispiel zwei Sensorelemente 9 angeordnet, die jeweils unabhängig voneinander über eine signalleitende Verbindung 10 mit einem auf der Innenschicht 8 angeordneten Reifenmodul 11 Signale austauschen können.

Die beiden signalleitenden Verbindungen 10 sind in Fig. 1 schematisiert durch Pfeile dargestellt. Die signalleitenden Verbindungen 10 können entweder drahtgebunden oder drahtlos ausgeführt sein. Demnach können die Signale zwischen den Sensorelementen 9 und dem Reifenmodul 11 entweder ohne zusätzliche Verbindungsmittel im Reifen 1 oder aber über ein zusätzliche, in den Reifen 1 eingebrachte leitfähige Verbindungsmittel, z.B. leitfähige Gummimaterialien, übertragen werden.

Erfindungsgemäß ist vorgesehen, dass die Sensorelemente 9, die in beliebiger Anzahl im Reifen 1 integriert sein können, als Sensorelemente 9 mit beschichteten bzw. gedruckten leitfähigen Strukturen (printed electronics) 13 (s. Fig. 2a, 2b, 2c, 2d) ausgebildet sind, die in geeigneter Weise bereits im Reifenaufbauprozess in den Reifen 1 integriert werden. Als gedruckte leitfähige Strukturen 13 werden hierbei Strukturen verstanden, die in einem beliebigen partikelabscheidenden Verfahren durch Aufbringen von leitfähigen Partikeln in einer bestimmten Anordnung auf einen Träger 12 ausgebildet werden.

Beispielhaft sind in den Figuren 2a, 2b, 2c, 2d Sensorelemente 9; 9a, 9b, 9c, 9d, 9e in unterschiedlichen Ausführungsformen dargestellt, wobei diese jeweils einen Träger 12 aufweisen, auf dem die leitfähigen Strukturen 13 in einer gewissen Anordnung abgeschieden bzw. aufdruckt sind, wobei durch die Anordnung eine bestimmte elektrische Funktionalität ausgebildet wird:
Demnach ist in Figur 2a als Sensorelement 9 ein resistives Sensorelement 9a vorgesehen, bei dem die leitfähige Struktur 13 über eine bestimmte Strecke zwischen zwei Kontaktstellen K1, K2 auf dem Träger 12 ausgedehnt ist. Der leitfähigen Struktur 13 kann dabei ein bestimmter Widerstandswert R zugeordnet werden, der über die Kontaktstellen K1, K2 abgegriffen bzw. gemessen werden kann. Die leitfähige Struktur 13 zwischen den Kontaktstellen K1, K2 kann auch derartig ausgebildet sein, dass beispielsweise eine Reihenschaltung oder eine Parallelschaltung von elektrischen Widerständen in dem resistiven Sensorelement 9a ausgebildet wird, so dass sich der zwischen den Kontaktstellen K1, K2 gemessene Widerstand R aus mehreren Einzelwiderständen zusammensetzt.

Gemäß der Ausführung in Figur 2b ist ein induktives Sensorelement 9b vorgesehen, das in Form einer Spule ausgeführt ist, bei der die leitfähige Struktur 13 spiralförmig angeordnet ist, um eine bestimmte Induktivität L (Selbstinduktivität) auszubilden. Die Spule ist beidseitig mit Kontaktstellen K1, K2 verbunden.

Gemäß dem Ausführungsbeispiel in Figur 2c wird ein kapazitives Sensorelement 9c ausgebildet, wobei die leitfähigen Strukturen 13 dazu die Form eines Kondensators ausbilden. Demnach sind die leitfähigen Strukturen 13 in einem Isolierbereich 14 voneinander elektrisch getrennt, so dass der Isolierbereich 14 als Dielektrikum des Kondensators wirkt. Über die Kontaktstellen K1, K2 kann daher eine Kapazität C des kapazitiven Sensorelementes 9c gemessen werden.

Gemäß Fig. 2d ist das Sensorelement 9 in Form eines Schwingkreises 9d ausgeführt, wobei dazu das resistive Sensorelement 9a gemäß Fig. 2a mit einem induktiven Sensorelement 9b gemäß Fig. 2b in geeigneter Weise kombiniert wird (schematisiert in Fig. 2d), um einen Schwingkreis 9d aus einem Widerstandselement (R) und einer Induktivität (L) auszubilden. Weiterhin kann dieser Schwingkreis 9d mit einem energieerzeugenden Sensorelement 9e kombiniert werden. Dieses wird beispielsweise durch eine abgeschiedene dielektrische und/oder eine piezoelektrische Schicht ausgebildet, die nach dem Prinzip des "energy harvesting" im Betrieb des Reifens 1 Bewegungsenergie oder Verformungsenergie in elektrische Energie umwandeln kann. Der dadurch erzeugte Energieimpuls kann über den Schwingkreis 9d aufgenommen werden. Das energieerzeugende Sensorelement 9e kann aber auch mit den anderen Sensorelementen 9a, 9b, 9c in entsprechender Weise kombiniert werden.

Vorzugsweise ist vorgesehen, dass der Träger 12 des jeweiligen Sensorelementes 9a, 9b, 9c, 9d, 9e durch eine flexible Gummischicht oder eine flexible Kunststofffolie bzw. ein Elastomer gebildet ist, wobei der Träger eine Dicke von beispielsweise 0,5 bis 1 Millimeter aufweist. Die gedruckten leitfähigen Strukturen 13 sind mit einem funktionellen Material, beispielsweise Graphen, einer aufgelösten Gummilösung mit leitfähigen Nanopartikeln oder sonstigen leifähigen, dielektrischen oder piezoelektrischen Pasten, die in einer bestimmten Anordnung gezielt auf dem flexiblen Träger 12 aufgebracht werden können, ausgebildet. Die leitfähigen Strukturen 13 können demnach mit dem Träger 12 verformt werden, so dass eine flexible Elektronik bzw. ein flexibles Sensorelement 9; 9a, 9b, 9c, 9d, 9e mit der jeweiligen elektrischen Funktionalität ausgebildet wird.

Die Wahl des flexiblen Materials für den Träger 12 hat hierbei den Vorteil, dass sich der Träger 12 und somit auch die leitfähigen Strukturen 13 leicht in das Gummimaterial der jeweiligen Reifenaufbaukomponente, in Fig. 1 dem Laufstreifen 2, einfügen lassen, ohne dass dabei bereits im Reifenaufbauprozess eine Schädigung des Reifens 1 auf Lebenszeit bzw. eines "Sollbruchstelle" in den Reifen 1 eingefügt wird. Das jeweilige flexible Sensorelement 9; 9a, 9b, 9c, 9d, 9e beeinträchtigt somit die Laufeigenschaften sowie die Lebensdauer des Reifens 1 nicht maßgeblich. Aufgrund der flexiblen Nachgiebigkeit kann das Sensorelement 9; 9a, 9b, 9c, 9d, 9e auch einfach an die Form des Reifens 1 bzw. der jeweiligen Reifenaufbaukomponente, in die es eingefügt oder angefügt werden soll, angepasst werden.

Dies kann gemäß einer Ausführungsform dadurch erfolgen, dass nach dem Aufbringen der leitfähigen Strukturen 13 auf den Träger 12 eine Heißverformung des gesamten Sensorelementes 9; 9a, 9b, 9c, 9d, 9e erfolgt. Demnach wird der Träger 12 mit den darauf angeordneten leitfähigen Strukturen 13 z.B. in einer Heizpresse bzw. einem Presswerkzeug in eine Form gebracht, die beispielsweise den Profilzellen bzw. der Profilrillen 3 des Reifens 1 nachempfunden ist. Das entsprechende Sensorelement 9; 9a, 9b, 9c, 9d, 9e wird demnach mit den leitfähigen Strukturen 13 in allen drei Raumrichtungen an die Form der Profilierung des Reifens 1 angepasst, was beispielhaft in Figur 1 dargestellt ist.

Die Heißverformung des Sensorelementes 9; 9a, 9b, 9c, 9d, 9e mit einem Presswerkzeug kann jedoch auch entfallen, wenn das Sensorelement 9; 9a, 9b, 9c, 9d, 9e im Reifenaufbauprozess im entsprechenden Fertigungsschritt derartig erhitzt bzw. mit der jeweiligen Reifenaufbaukomponente verbacken wird, dass sich das jeweilige Sensorelement 9; 9a, 9b, 9c, 9d, 9e bereits dadurch an die Form der jeweiligen Profilzelle bzw. der Profilierung des Reifens 1 anpasst und Höhenunterschiede dadurch automatisch ausgeglichen werden.

Die Positionierung des Sensorelementes 9; 9a, 9b, 9c, 9d, 9e im Reifen 1 erfolgt in Fig. 1 derartig, dass das Sensorelement 9; 9a, 9b, 9c, 9d, 9e als Abriebsensor verwendet werden kann. Hat sich der Laufstreifen 2 demnach um eine bestimmte Abriebhöhe A abgenutzt, so wird auch das jeweilige Sensorelement 9; 9a, 9b, 9c, 9d, 9e abgetragen. Die Abriebhöhe A kann hierbei durch eine gezielte Positionierung des Sensorelementes 9; 9a, 9b, 9c, 9d, 9e im Laufstreifen 2 eingestellt werden, wobei beispielsweise eine Verschleiß-Grenze von ca. vier Millimetern bei Winterreifen und 1,5 Millimetern bei Sommerreifen als Grenzwerte für die Abriebhöhe A vorgesehen sein können. Es können auch mehrere derartiger Sensorelemente 9; 9a, 9b, 9c, 9d in unterschiedlichen Höhen angeordnet werden, so dass eine Abtragung für unterschiedliche Abriebhöhen A erfasst werden kann.

Das Erkennen des Abtragens des Sensorelementes 9; 9a, 9b, 9c, 9d, 9e und somit des Erreichens einer bestimmten Abriebhöhe A kann durch das Messen der jeweiligen elektronischen Eigenschaften, d.h. des Widerstandes R, der Kapazität C oder der Induktivität L des jeweiligen Sensorelementes 9; 9a, 9b, 9c, 9d, 9e erfolgen. In dem Ausführungsbeispiel gemäß Fig. 2a bzw. 2d erfolgt dies durch Überwachung des Widerstandes R des resistiven Sensorelementes 9a. Ist das resistive Sensorelement 9a demnach abgetragen, so steigt der gemessene Widerstand R auf unendlich an. Bei dem kapazitiven Sensorelement 9c gemäß Fig. 2c kann in entsprechender Weise kontinuierlich oder in gewissen zeitlichen Abständen die Kapazität C des kapazitiven Sensorelementes 9c gemessen werden. Ist die Abriebhöhe A erreicht, so kann dies durch einen starken Anstieg in der der Kapazität C erfasst werden. Entsprechend kann auch bei dem induktiven Sensorelement 2b gemäß Fig. 2b über die Kontaktstellen K1, K2 ständig in beliebiger Weise die Induktivität L überwacht werden, um auf einen entsprechenden Abrieb zu schließen. In Kombination mit dem energieerzeugenden Sensorelement 9e kann in den genannten Beispielen autark ein Energieimpuls erzeugt werden, wenn der Reifen 1 mit dem energieerzeugenden Teil des Sensorelementes beispielsweise auf dem Untergrund abrollt. Fällt dieser Energieimpuls im Betrieb des Reifens 1 weg, so kann auf das Erreichen der Abriebhöhe A geschlossen werden.

Die Überwachung aller Sensorelemente 9; 9a, 9b, 9c, 9d, 9e bzw. deren elektrischer Eigenschaften R, C, L kann hierbei auch während des Betriebs des Reifens 1 erfolgen, so dass die Überwachung ohne viel Aufwand dauerhaft möglich ist. Wurde die entsprechende Änderung der jeweiligen elektrischen Eigenschaft R, C, L festgestellt, kann ein Warnsignal an den Fahrer ausgegeben werden, so dass dieser einen Reifenwechsel veranlassen kann.

Die Messung der jeweiligen elektrischen Eigenschaft C, R, L des jeweiligen Sensorelementes 9; 9a, 9b, 9c erfolgt über die signalleitenden Verbindungen 10 vom Reifenmodul 11 aus. Das Reifenmodul 11 kann die elektrischen Eigenschaften R, C, L auch auswerten und feststellen, ob die Abriebhöhe A bereits erreicht wurde. Alternativ kann das Reifenmodul 11 aber auch lediglich eine Vorverarbeitung der gemessenen elektrischen Eigenschaft R, C, L durchführen und diese an eine übergeordnete Auswerteeinheit (nicht dargestellt) z.B. im Fahrzeug zur Auswertung ausgeben.

Zur Messung kann vorgesehen sein, dass die Sensorelemente 9; 9a, 9b, 9c, 9d, 9e mit ihren jeweiligen Kontaktstellen K1, K2 kabelgebunden z.B. über leitfähige Bereiche im Reifen 1 mit dem Reifenmodul 11 verbunden sind. Dadurch kann eine direkte Messung der jeweiligen elektrischen Eigenschaft R, C, L erfolgen.

Gemäß einer alternativen Ausführungsform ist eine indirekte Messung mit einer drahtlosen Übertragung vorgesehen. Dies kann mit dem in Figur 2d dargestellten Schwingkreis 9d erfolgen, wobei der Schwingkreis 9d durch den resistiven Teil (entsprechend dem resistiven Sensorelement 9a) in Kombination mit dem induktiven Teil (entsprechend dem induktiven Sensorelement 9b) ausgebildet wird. Über diesen Schwingkreis 9d kann das Reifenmodul 11 drahtlos mit dem Sensorelement 9; 9d in Wechselwirkung treten, so dass eine drahtlose signalleitende Verbindung 10 zwischen beiden ausgebildet wird.

Dabei wird ausgenutzt, dass durch das Zusammenwirken des resistiven Teils (9a) mit dem induktiven Teil (9b) ein gewisses magnetisches Feld um den induktiven Teil (9b) entsteht, das abhängig von der Induktivität L sowie dem Widerstand R ist. Dieses wirkende magnetische Feld kann von einer benachbarten Detektionsspule 15 drahtlos aufgenommen werden. Diese Detektionsspule 15 kann beispielsweise unterhalb des Reifenmoduls 11 angeordnet sein, wie in Figur 1 dargestellt, oder an einer beliebigen Stelle auf der Innenschicht 8 des Reifens 1. Die Detektionsspule 15 ist beispielsweise mit dem Reifenmodul 11 verbunden. Über das wirkende magnetische Feld kann die Detektionsspule 15 kontaktlos mit dem induktiven Teil (9b) in Wechselwirkung treten und z.B. das Reifenmodul 11 kann durch ein Auslesen der Detektionsspule 15 feststellen, ob der Schwingkreis 9d noch funktionstüchtig ist und demnach die Abriebhöhe A bereits erreicht wurde. Die Funktionsfähigkeit des resistiven Teils (9a) kann somit über den induktiven Teil (9b) von der Detektionsspule 15 abgefragt werden. Damit ist in einfacher Weise auch eine drahtlose Übertragung möglich, ohne dass leitfähige Verbindungen durch den Reifen lgelegt werden müssen. Auch der energieerzeugende Teil 9e kann bei der Ausführung als Schwingkreis 9d zur Detektion der Abriebhöhe A beitragen, wobei ein erzeugter Energieimpuls über den Schwingkreis 9d von der Detektionsspule 15 erfasst werden kann.

Damit der drahtlose Übertragungsweg durch die Gürtellagen 4 sowie die Karkasse 7 nicht zu sehr gestört wird, wird der induktive Teil (9b) des Schwingkreises 9d und/oder die Detektionsspule 15 an entsprechender Stelle im Reifen 1 angeordnet oder aber die Gürtellagen 4 sowie die Karkasse 7 an den entsprechenden Stellen angepasst, um eine Störung der Übertragung zu vermeiden.

In einem erfindungsgemäßen Herstellungsverfahren eines Reifens 1 mit einem integrierten Sensorelement 9; 9a, 9b, 9c, 9d, 9e ist demnach in einem ersten Schritt St1 vorgesehen, das jeweilige Sensorelement 9; 9a, 9b, 9c, 9d, 9e zunächst bereitzustellen. Dazu werden in einem ersten Teilschritt St1.1 der flexible Träger 12 sowie das leitfähige Material bzw. die leitfähigen Partikel zum Ausbilden der leitfähigen Struktur 13 bereitgestellt. In einem zweiten Teilschritt St1.2 wird das leitfähige Material in einer vordefinierten Anordnung in einem partikelabscheidenden Verfahren auf den Träger 12 aufgebracht, um die jeweilige leitfähige Struktur 13 auf dem Träger 12 auszubilden. Der Verlauf bzw. die Anordnung der leitfähigen Struktur ist dabei derartig gewählt, dass entweder ein resistives und/oder ein induktives und/oder ein kapazitives Sensorelement 9a, 9b, 9c, 9d, 9e ausbildet wird.

Anschließend wird das somit ausgebildete Sensorelement 9; 9a, 9b, 9c, 9d, 9e aus Träger 12 und entsprechender leitfähiger Struktur 13 in einem dritten Teilschritt St1.3 in einem Heißumform-Vorgang an den Verlauf bzw. die Kontur des Reifens 1 an der einzubringenden Position angepasst. Dies erfolgt entweder in einem entsprechenden Presswerkzeug oder aber durch Verbacken mit dem Reifen 1 durch Auflegen an der entsprechenden Position im Reifen 1 und Erwärmen.

Wird ein Presswerkzeug verwendet, wird das umgeformte Sensorelement 9; 9a, 9b, 9c, 9d, 9e anschließend an die entsprechende Position des bis dahin prozessierten Reifens 1 aufgelegt. Die Positionierung des jeweiligen Sensormoduls 9; 9a, 9b, 9c, 9d, 9e erfolgt dabei in Abhängigkeit davon, ob eine drahtgebundene oder eine drahtlose Übertragung erfolgen soll. Ist demnach eine drahtgebundene Kontaktierung vorgesehen, so ist dafür zu sorgen, dass die Kontaktstellen K1, K2 des jeweiligen Sensorelementes 9; 9a, 9b, 9c an entsprechende leitfähige Verbindungen im Reifen 1 angebunden werden.

Nach dem Auflegen bzw. Aufbringen des verformten (oder unverformten) Sensorelementes 9; 9a, 9b, 9c, 9d, 9e an die entsprechende Position im Reifen 1 kann der Reifenaufbauprozess in einem Schritt St2 mit den weiteren Prozessschritten, z.B. Aufspulen, Einbringen der Profilierung und Vulkanisieren, fortgeführt werden, um den Reifen 1 fertigzustellen. Dadurch wird das gedruckte Sensorelement 9; 9a, 9b, 9c, 9d, 9e bereits während des Herstellungsprozesses in den Reifen 1 integriert.

### Bezugszeichenliste

- 1: Reifen
- 2: Laufstreifen
- 3: Profilrille
- 4: Gürtellage
- 5: Seitenwand
- 6: Reifenwulst
- 7: Karkasse
- 8: Innenschicht
- 9: Sensorelement
- 9a: resistives Sensorelement
- 9b: kapazitives Sensorelement
- 9c: induktives Sensorelement
- 9d: Schwingkreis
- 9e: energieerzeugendes Sensorelement
- 10: signalleitende Verbindung
- 11: Reifenmodul
- 12: Träger
- 13: gedruckte leitfähige Struktur
- 14: Isolierbereich
- 15: Detektionsspule

- A: Abriebhöhe
- C: Kapazität
- L: Induktivität
- K1, K2: Kontaktstellen
- R: Widerstand
- St1, St1.1, St1.2, St1.3, St2: Schritte des Verfahrens

## Patentansprüche

1. Reifen (1), insbesondere Fahrzeugreifen, wobei der Reifen (1) durch mehrere Reifenaufbaukomponenten (2, 3, 4, 5, 6, 7, 8) ausgebildet ist und mindestens ein Sensorelement (9; 9a, 9b, 9c, 9d, 9e) derartig in den Reifenaufbaukomponenten (2, 3, 4, 5, 6, 7, 8) angeordnet ist, dass über das mindestens eine Sensorelement (9; 9a, 9b, 9c, 9d, 9e) auf eine Abriebhöhe (A) des Laufstreifens (2) des Reifens (1) geschlossen werden kann,
wobei dazu eine die elektrische Eigenschaft des mindestens einen Sensorelementes (9; 9a, 9b, 9c, 9d, 9e) charakterisierende elektrische Messgröße (R, C, L) über eine signalleitenden Verbindung (10) erfassbar ist, und aus einem zeitlichen Verhalten der erfassbaren elektrischen Messgröße (R, C, L) des jeweiligen Sensorelementes (9; 9a, 9b, 9c, 9c) auf eine Abriebhöhe (A) des Laufstreifens (2) geschlossen werden kann, wobei das mindestens eine Sensorelement (9; 9a, 9b, 9c, 9d, 9e) einen flächig ausgedehnten, flexiblen Träger (12) aufweist und auf dem Träger (12) mindestens eine leitfähige Struktur (13) abgeschieden ist, wobei die erfassbare elektrische Messgröße (R, C, L) die elektrische Eigenschaft der mindestens einen abgeschiedenen leitfähigen Struktur (13) auf dem Träger (12) charakterisiert und der flexible Träger (12) mit der abgeschiedenen leitfähigen Struktur (13) derartig in den Reifenaufbaukomponenten (2, 3, 4, 5, 6, 7, 8) angeordnet ist, dass aus einer zeitlichen Veränderung der elektrischen Messgröße (R, C, L) auf eine Abriebhöhe (A) des Laufstreifens (2) geschlossen werden kann,
wobei das Sensorelement (9; 9a, 9b, 9c, 9d, 9e) zumindest bereichsweise in mindestens einer Reifenaufbaukomponente integriert ist, wobei das Sensorelement (9; 9a, 9b, 9c, 9d, 9e) im Reifenaufbauprozess in die Reifenaufbaukomponente (2, 3, 4, 5, 6, 7, 8) zumindest bereichsweise eingebracht ist, wobei das Sensorelement (9; 9a, 9b, 9c, 9d, 9e) als zumindest bereichsweise umgeformtes Sensorelement (9; 9a, 9b, 9c, 9d, 9e) mit umgeformtem Träger (12) und umgeformter leitfähiger Struktur (13) ausgebildet ist, **dadurch gekennzeichnet, dass**
das umgeformte Sensorelement (9; 9a, 9b, 9c, 9d, 9e) im Laufstreifen (2) flächig in axialer Richtung ausgedehnt ist und derartig in der Reifenaufbaukomponente (2, 3, 4, 5, 6, 7, 8) angeordnet ist, dass das Sensorelement (9; 9a, 9b, 9c, 9d, 9e) an eine Konturierung des Reifens (1) angepasst ist, so dass das Sensorelement (9; 9a, 9b, 9c, 9d, 9e) um eine Profilrille oder eine weitere in den Laufstreifen (2) eingebrachte Struktur gelegt ist.

2. Reifen (1) nach Anspruch 1,
**dadurch gekennzeichnet, dass**
das Sensorelement (9; 9a, 9b, 9c, 9d, 9e) derartig in der Reifenaufbaukomponente (2, 3, 4, 5, 6, 7, 8) integriert ist, dass das Sensorelement (9; 9a, 9b, 9c, 9d, 9e) bei Erreichen einer bestimmten Abriebhöhe (A) des Laufstreifens (2) zumindest bereichsweise derartig abgetragen wird, dass sich die die leitfähige Struktur (13) charakterisierende elektrische Messgröße (R, C, L) zeitlich verändert.

3. Reifen (1) nach einem der vorhergehenden Ansprüche,
**dadurch gekennzeichnet, dass**
das mindestens eine Sensorelement (9) durch ein resistives Sensorelement (9a) und/oder ein kapazitives Sensorelement (9b) und/oder ein induktives Sensorelement (9c) und/oder einen Schwingkreis (9d) und/oder ein energieerzeugendes Sensorelement (9e) ausgebildet ist, wobei die elektrisch leitfähige Struktur (13) auf dem Träger (12) dazu die Form eines flächig ausgedehnten Widerstandes mit einem bestimmten Widerstandswert (R) bzw. eines Kondensators mit einer bestimmten Kapazität (C) bzw. einer Spule mit einer bestimmten Induktivität (L) bzw. einer Kombination daraus bzw. eines ausgedehnten dielektrischen oder piezoelektrischen Bereiches aufweist.

4. Reifen (1) nach einem der vorhergehenden Ansprüche,
**dadurch gekennzeichnet, dass**
die signalleitende Verbindung (10) eine drahtgebundene und/oder eine drahtlose Verbindung ist.

5. Reifen (1) nach Anspruch 4,
**dadurch gekennzeichnet, dass**
ein induktiver Teil des Schwingkreises (9d) zur Ausbildung der drahtlosen signalleitenden Verbindung (10) dient, wobei der induktive Teil (9c) dazu mit einer Detektionsspule (15) in Wirkverbindung steht, so dass
- bei Vorliegen eines funktionsfähigen Schwingkreises (9d) eine die jeweilige elektrische Messgröße (R, C, L) charakterisierende Größe im induktiven Teil des Schwingkreises (9d) erzeugt wird und diese von der Detektionsspule (15) erfassbar ist, und
- bei Vorliegen einer Beeinträchtigung des Schwingkreises (9d) bei Erreichen oder Überschreiten der Abriebhöhe (H) eine zeitliche Veränderung der die jeweilige elektrische Messgröße (R, C, L) charakterisierende Größe im induktiven Teil des Schwingkreises erzeugt wird und über die Detektionsspule (15) erfassbar ist.

6. Reifen (1) nach Anspruch 4 oder 5,
**dadurch gekennzeichnet, dass**
die drahtgebundene signalleitende Verbindung (10) über mit der mindestens einen leitfähigen Struktur (13) verbundenen Kontaktstellen (K1, K2) ausgebildet ist, wobei das mindestens eine Sensorelement (9; 9a, 9b, 9c) über die Kontaktstellen (K1, K2) mit Verbindungsmitteln verbunden ist zum Ermöglichen einer Auswertung der elektrischen Messgrößen (R, C, L).

7. Reifen (1) nach einem der vorhergehenden Ansprüche,
**dadurch gekennzeichnet, dass**
die signalleitende Verbindung (10) zwischen dem Sensorelement (9; 9a, 9b, 9c, 9d, 9e) und einem Reifenmodul (11) auf einer Innenschicht (8) des Reifens (1) ausgebildet ist.

8. Reifen (1) nach einem der vorhergehenden Ansprüche,
**dadurch gekennzeichnet, dass**
die mindestens eine leitfähige Struktur (13) durch Abscheiden von Partikeln, insbesondere von Graphen und/oder von Metall und/oder von einer Gummilösung mit leitfähigen Partikeln, insbesondere leitfähigen Nanopartikeln, und/oder von einer leitfähigen und/oder dielektrischen und/oder piezoelektrischen Paste auf dem Träger (12) ausgebildet ist.

9. Reifen (1) nach einem der vorhergehenden Ansprüche,
**dadurch gekennzeichnet, dass**
der Reifen (1) mehrere Sensorelemente (9; 9a, 9b, 9c, 9d, 9e) an unterschiedlichen Positionen und/oder in unterschiedlichen Abriebhöhen (A) des Reifens (1) aufweist.

10. Verfahren zum Herstellen eines Reifens (1) nach einem der vorhergehenden Ansprüche, mit mindestens den folgenden Schritten:
Bereitstellen mindestens eines Sensorelementes (9; 9a, 9b, 9c, 9d, 9e) (St1), wobei dazu
- ein flexibler Träger (12) und leitfähige Partikel zum Ausbilden der mindestens einen leitfähigen Struktur (13) bereitgestellt werden (St1.1); und
- die leitfähigen Partikel auf den flexiblen Träger (12) gezielt abgeschieden werden, so dass mindestens eine vordefinierte leitfähige Struktur (13) für das jeweilige Sensorelement (9; 9a, 9b, 9c, 9d, 9e) ausgebildet wird (St1.2); und
Auflegen des bereitgestellten Sensorelementes (9; 9a, 9b, 9c, 9d, 9e) auf die jeweilige Reifenaufbaukomponente (2, 3, 4, 5, 6, 7, 8) des Reifens (1) und Weiterführung des Reifenaufbauprozesses zur Fertigstellung des Reifens (1) (St2),
wobei das bereitgestellte Sensorelement (9; 9a, 9b, 9c, 9d, 9e) vor und/oder nach dem Auflegen auf die jeweilige Reifenaufbaukomponente (2, 3, 4, 5, 6, 7, 8) durch Einwirken von Wärme derartig umgeformt wird (St1.3), dass das Sensorelement (9; 9a, 9b, 9c, 9d, 9e) im Laufstreifen (2) flächig in axialer Richtung ausgedehnt ist und an eine Konturierung des Reifens (1) angepasst wird, so dass das Sensorelement (9; 9a, 9b, 9c, 9d, 9e) um eine Profilrille oder eine weitere in den Laufstreifen (2) eingebrachte Struktur gelegt wird.

## Claims

1. Tyre (1), in particular vehicle tyre, wherein the tyre (1) is formed by a plurality of tyre building components (2, 3, 4, 5, 6, 7, 8) and at least one sensor element (9; 9a, 9b, 9c, 9d, 9e) is arranged in the tyre building components (2, 3, 4, 5, 6, 7, 8) in such a way that an abrasion height (A) of the tread (2) of the tyre (1) can be inferred by means of the at least one sensor element (9; 9a, 9b, 9c, 9d, 9e),
wherein for this purpose an electrical measured variable (R, C, L) characterizing the electrical property of the at least one sensor element (9; 9a, 9b, 9c, 9d, 9e) can be detected by way of a signal-conducting connection (10), and an abrasion height (A) of the tread (2) can be inferred from a behaviour over time of the detectable electrical measured variable (R, C, L) of the respective sensor element (9; 9a, 9b, 9c, 9d, 9e), wherein the at least one sensor element (9; 9a, 9b, 9c, 9d, 9e) has a flexible support (12) of a two-dimensional extent and deposited on the support (12) is at least one conductive structure (13), wherein the detectable electrical measured variable (R, C, L) characterizes the electrical property of the at least one deposited conductive structure (13) on the support (12) and the flexible support (12) with the deposited conductive structure (13) is arranged in the tyre building components (2, 3, 4, 5, 6, 7, 8) in such a way that an abrasion height (A) of the tread (2) can be inferred from a change over time of the electrical measured variable (R, C, L),
wherein the sensor element (9; 9a, 9b, 9c, 9d, 9e) is integrated at least in certain regions in at least one tyre building component, wherein the sensor element (9; 9a, 9b, 9c, 9d, 9e) is incorporated at least in certain regions in the tyre building component (2, 3, 4, 5, 6, 7, 8) in the tyre building process, wherein the sensor element (9; 9a, 9b, 9c, 9d, 9e) is formed as a sensor element (9; 9a, 9b, 9c, 9d, 9e) that has been shaped at least in certain regions, with a shaped support (12) and a shaped conductive structure (13),
**characterized in that**
the shaped sensor element (9; 9a, 9b, 9c, 9d, 9e) is made to extend two-dimensionally in the axial direction in the tread (2) and is arranged in the tyre building component (2, 3, 4, 5, 6, 7, 8) in such a way that the sensor element (9; 9a, 9b, 9c, 9d, 9e) is adapted to a contouring of the tyre (1), so that the sensor element (9; 9a, 9b, 9c, 9d, 9e) is placed around a tread groove or other structure incorporated in the tread (2).

2. Tyre (1) according to Claim 1,
**characterized in that**
the sensor element (9; 9a, 9b, 9c, 9d, 9e) is integrated in the tyre building component (2, 3, 4, 5, 6, 7, 8) in such a way that, when a specific abrasion height (A) of the tread (2) is reached, the sensor element (9; 9a, 9b, 9c, 9d, 9e) is worn away at least in certain regions in such a way that the electrical measured variable (R, C, L) characterizing the conductive structure (13) changes over time.

3. Tyre (1) according to one of the preceding claims,
**characterized in that**
the at least one sensor element (9) is formed by a resistive sensor element (9a) and/or a capacitive sensor element (9b) and/or an inductive sensor element (9c) and/or an oscillating circuit (9d) and/or an energy-generating sensor element (9e), wherein the electrically conductive structure (13) on the support (12) has for this purpose the form of a resistor of a two-dimensional extent with a specific resistance value (R) or a capacitor with a specific capacitance (C) or a coil with a specific inductance (L) or a combination thereof or an extended dielectric or piezoelectric region.

4. Tyre (1) according to one of the preceding claims,
**characterized in that**
the signal-conducting connection (10) is a wire-bound and/or wireless connection.

5. Tyre (1) according to Claim 4,
**characterized in that**
an inductive part of the oscillating circuit (9d) serves for forming the wireless signal-conducting connection (10), wherein the inductive part (9c) is for this purpose in operative connection with a detection coil (15), so that
- if there is a functional oscillating circuit (9d), a quantity characterizing the respective electrical measured variable (R, C, L) is generated in the inductive part of the oscillating circuit (9d) and this quantity can be detected by the detection coil (15), and
- if there is an impairment of the oscillating circuit (9d) when the abrasion height (H) is reached or exceeded, a change over time of the quantity characterizing the respective electrical measured variable (R, C, L) is generated in the inductive part of the oscillating circuit and this quantity can be detected by means of the detection coil (15).

6. Tyre (1) according to Claim 4 or 5,
**characterized in that**
the wire-bound signal-conducting connection (10) is formed by way of contact points (K1, K2) connected to the at least one conductive structure (13), wherein the at least one sensor element (9; 9a, 9b, 9c) is connected by way of the contact points (K1, K2) to connecting means for making possible an evaluation of the electrical measured variables (R, C, L) .

7. Tyre (1) according to one of the preceding claims,
**characterized in that**
the signal-conducting connection (10) is formed between the sensor element (9; 9a, 9b, 9c, 9d, 9e) and a tyre module (11) on an inner layer (8) of the tyre (1).

8. Tyre (1) according to one of the preceding claims,
**characterized in that**
the at least one conductive structure (13) is formed by depositing particles, in particular graphene and/or metal and/or a rubber solution with conductive particles, in particular conductive nanoparticles,
and/or a conductive and/or dielectric and/or piezoelectric paste on the support (12).

9. Tyre according to one of the preceding claims,
**characterized in that**
the tyre (1) has a plurality of sensor elements (9; 9a, 9b, 9c, 9d, 9e) at different positions and/or at different abrasion heights (A) of the tyre (1).

10. Method for producing a tyre (1) according to one of the preceding claims, comprising at least the following steps:
providing at least one sensor element (9; 9a, 9b, 9c, 9d, 9e) (St1), wherein for this purpose
- a flexible support (12) and conductive particles are provided for forming the at least one conductive structure (13) (St1.1); and
- the conductive particles are deposited in a targeted manner on the flexible support (12), so that at least one pre-defined conductive structure (13) for the respective sensor element (9; 9a, 9b, 9c, 9d, 9e) is formed (St1.2); and
placing the provided sensor element (9; 9a, 9b, 9c, 9d, 9e) onto the respective tyre building component (2, 3, 4, 5, 6, 7, 8) of the tyre (1) and continuing the tyre building process up until completion of the tyre (1) (St2),
wherein, before and/or after being placed onto the respective tyre building component (2, 3, 4, 5, 6, 7, 8), the provided sensor element (9; 9a, 9b, 9c, 9d, 9e) is shaped by exposure to heat (St1.3) in such a way that the sensor element (9; 9a, 9b, 9c, 9d, 9e) is made to extend two-dimensionally in the axial direction in the tread (2) and is adapted to a contouring of the tyre (1), so that the sensor element (9; 9a, 9b, 9c, 9d, 9e) is placed around a tread groove or other structure incorporated in the tread (2) .

## Revendications

1. Pneumatique (1), en particulier pneumatique de véhicule, le pneumatique (1) étant formé par une pluralité de composants structurels (2, 3, 4, 5, 6, 7, 8) et au moins un élément de détection (9 ; 9a, 9b, 9c, 9d, 9e) étant disposé dans les composants structurels (2, 3, 4, 5, 6, 7, 8) de sorte qu'un niveau d'abrasion (A) de la bande de roulement (2) du pneumatique (1) puisse être déduit par le biais de l'au moins un élément capteur (9 ; 9a, 9b, 9c, 9d, 9e),
pour cela une grandeur de mesure électrique (R, C, L) qui caractérise la propriété électrique de l'au moins un élément de détection (9 ; 9a, 9b, 9c, 9d, 9e) pouvant être détectée par le biais d'une liaison conductrice de signal (10), et un niveau d'abrasion (A) de la bande de roulement (2) pouvant être déduit d'un comportement dans le temps de la grandeur de mesure électrique détectable (R, C, L) de l'élément de détection respectif (9 ; 9a, 9b, 9c, 9c), l'au moins un élément de détection (9 ; 9a, 9b, 9c, 9d, 9e) comportant un support flexible (12) sensiblement bidimensionnel et au moins une structure conductrice (13) étant déposée sur le support (12), la grandeur de mesure électrique détectable (R, C, L) caractérisant la propriété électrique de l'au moins une structure conductrice (13) déposée sur le support (12) et le support flexible (12), sur lequel est déposée la structure conductrice (13), étant disposé dans les composants structurels (2, 3, 4, 5, 6, 7, 8) du pneumatique de telle sorte qu'un niveau d'abrasion (A) de la bande de roulement (2) puisse être déduit d'une variation dans le temps de la grandeur de mesure électrique (R, C, L),
l'élément de détection (9 ; 9a, 9b, 9c, 9d, 9e) étant au moins partiellement intégré dans au moins un composant structurel du pneumatique, l'élément de détection (9 ; 9a, 9b, 9c, 9d, 9e) étant introduit au moins dans certaines zones dans le composant structurel (2, 3, 4, 5, 6, 7, 8) du pneumatique au cours du processus de fabrication de pneumatique, l'élément de détection (9 ; 9a, 9b, 9c, 9d, 9e) étant conçu comme un élément de détection (9 ; 9a, 9b, 9c, 9d, 9e) qui est mis en forme au moins dans certaines zones et qui est pourvu d'un support (12) mis en forme et d'une structure conductrice (13) mise en forme,
**caractérisé en ce que**
l'élément de détection (9 ; 9a, 9b, 9c, 9d, 9e) mis en forme est étendu dans la bande de roulement (2) de manière sensiblement bidimensionnelle dans la direction axiale et est disposé dans le composant structurel (2, 3, 4, 5, 6, 7, 8), du pneumatique de telle sorte que l'élément de détection (9 ; 9a, 9b, 9c, 9d, 9e) soit adapté à un contour du pneumatique (1) de sorte que l'élément de détection (9 ; 9a, 9b, 9c, 9d, 9e) soit placé autour d'une rainure profilée ou d'une autre structure introduite dans la bande de roulement (2).

2. Pneumatique (1) selon la revendication 1,
**caractérisé en ce que**
l'élément de détection (9 ; 9a, 9b, 9c, 9d, 9e) est intégré dans le composant structurel (2, 3, 4, 5, 6, 7, 8) du pneumatique de telle sorte que, lorsqu'un niveau d'abrasion (A) déterminé de la bande de roulement (2) est atteint, l'élément de détection (9 ; 9a, 9b, 9c, 9d, 9e) est abrasé au moins dans certaines zones de telle sorte que la grandeur de mesure électrique (R, C, L) caractérisant la structure conductrice (13) varie dans le temps.

3. Pneumatique (1) selon l'une des revendications précédentes,
**caractérisé en ce que**
l'au moins un élément de détection (9) est formé par un élément de détection résistif (9a) et/ou un élément de détection capacitif (9b) et/ou un élément de détection inductif (9c) et/ou un circuit oscillant (9d) et/ou un élément de détection (9e) générateur d'énergie, la structure électriquement conductrice (13) sur le support (12) se présentant sous la forme d'une résistance s'étendant de manière sensiblement bidimensionnelle et ayant une valeur de résistance (R) déterminée ou sous la forme d'un condensateur ayant une capacité (C) déterminée ou sous la forme d'une bobine ayant une inductance (L) déterminée ou sous la forme d'une combinaison de ceux-ci ou sous la forme d'une région diélectrique ou piézoélectrique étendue.

4. Pneumatique (1) selon l'une des revendications précédentes,
**caractérisé en ce que**
la liaison conductrice de signal (10) est une liaison filaire et/ou sans fil.

5. Pneumatique (1) selon la revendication 4,
**caractérisé en ce que**
une partie inductive du circuit résonnant (9d) est utilisée pour former la liaison conductrice de signal sans fil (10), la partie inductive (9c) étant reliée fonctionnellement à une bobine de détection (15) de sorte que
- si un circuit résonnant fonctionnel (9d) est présent, une variable caractérisant la grandeur de mesure électrique respective (R, C, L) soit générée dans la partie inductive du circuit résonnant (9d) et puisse être détectée par la bobine de détection (15) et
- s'il y a une dégradation du circuit résonnant (9d) lorsque le niveau d'abrasion (H) est atteint ou dépassé, une variation dans le temps de la grandeur caractérisant la grandeur de mesure électrique respective (R, C, L) est générée dans la partie inductive du circuit résonnant et peut être détectée par la bobine de détection (15).

6. Pneumatique (1) selon la revendication 4 ou 5,
**caractérisé en ce que**
la liaison conductrice de signal filaire (10) est formée par des points de contact (K1, K2) reliés à l'au moins une structure conductrice (13), l'au moins un élément de détection (9 ; 9a, 9b, 9c) étant relié à des moyens de liaison par le biais des points de contact (K1, K2) pour permettre l'évaluation des grandeurs de mesure électriques (R, C, L).

7. Pneumatique (1) selon l'une des revendications précédentes,
**caractérisé en ce que**
la liaison conductrice de signal (10) entre l'élément de détection (9 ; 9a, 9b, 9c, 9d, 9e) et un module de pneumatique (11) est formée sur une couche intérieure (8) du pneumatique (1).

8. Pneumatique (1) selon l'une des revendications précédentes,
**caractérisé en ce que**
l'au moins une structure conductrice (13) est formée sur le support (12) par dépôt de particules, en particulier de graphène et/ou de métal et/ou d'une solution de caoutchouc comportant des particules conductrices, en particulier des nanoparticules conductrices, et/ou une pâte conductrice et/ou diélectrique et/ou piézoélectrique.

9. Pneumatique (1) selon l'une des revendications précédentes,
**caractérisé en ce que**
le pneumatique (1) comporte plusieurs éléments de détection (9 ; 9a, 9b, 9c, 9d, 9e) à différentes positions et/ou à différents niveaux d'abrasion (A) du pneumatique (1).

10. Procédé de fabrication d'un pneumatique (1) selon l'une des revendications précédentes, le procédé comprenant au moins les étapes suivantes :
fournir au moins un élément de détection (9 ; 9a, 9b, 9c, 9d, 9e) (St1), ce pour quoi
- un support flexible (12) et des particules conductrices sont prévus pour former l'au moins une structure conductrice (13) (St1.1) ; et
- les particules conductrices sont déposées de manière ciblée sur le support flexible (12) de façon à former au moins une structure conductrice prédéfinie (13) pour l'élément de détection respectif (9 ; 9a, 9b, 9c, 9d, 9e) (St1.2) ; et
placer l'élément de détection prévu (9 ; 9a, 9b, 9c, 9d, 9e) sur le composant structurel respectif (2, 3, 4, 5, 6, 7, 8) du pneumatique (1) et poursuivre le processus de construction du pneumatique pour terminer le pneumatique (1) (St2),
l'élément de détection prévu (9 ; 9a, 9b, 9c, 9d, 9e) étant mis en forme, avant et/ou après avoir été placé sur le composant structurel respectif (2, 3, 4, 5, 6, 7, 8) de pneumatique, par l'action de la chaleur (St1.3) de sorte que l'élément de détection (9 ; 9a, 9b, 9c, 9d, 9e) soit étendu dans la bande de roulement (2) de manière sensiblement bidirectionnelle dans la direction axiale et soit adapté à un contour du pneumatique (1) de sorte que l'élément de détection (9 ; 9a, 9b, 9c, 9d, 9e) soit placé autour d'une rainure profilée ou d'une autre structure introduite dans la bande de roulement (2).
